# EUROPÄISCHE PATENTANMELDUNG

(11) **EP 4 082 339 A1**
(43) Veröffentlichungstag der Anmeldung: **02.11.2022**
(21) Anmeldenummer: 22000104.4
(22) Anmeldetag: 20.04.2022
(51) Int. Cl.: A01N 1/02

(54) **MITTEL ZUR KONSERVIERUNG VON SÄUGETIERSPERMA UND VERWENDUNG DES MITTELS**

(30) Priorität: 29.04.2021 DE 102021002257
(71) Anmelder: Forschungsverbund Berlin e.V., 12489 Berlin (DE)
(72) Erfinder: HOLTZE, Susanne, 10961 Berlin (DE)
(74) Vertreter: Neumann, Günter

(57) **Zusammenfassung**

Die Erfindung betrifft ein Mittel zur Konservierung von Säugetiersperma das gewonnen wird
- durch Extraktion eines Mediums 1 als flüssige Phase mit Spermien aus dem Uterus und dem Eileiter spermienspeichernder Fledermäuse und
- durch Extraktion eines Mediums 2 als flüssige Phase mit Spermien aus dem Nebenhoden spermienspeichernder Fledermäuse,
- durch anschließende Ermittlung des pH-Wertes und Osmolarität der Medien 1 und 2 sowie der Art und Weise der Umhüllung beziehungsweise Verpackung der Spermienmembran und des Spermiengenoms,
- danach jeweils Separieren der flüssigen Phasen mit Spermien der Medien 1 und 2 zu einem Pellet mit gespeicherten Spermien und zu einem flüssigen Überstand,
- anschließend jeweils Identifikation der in dem flüssigen Überstand der Medien 1 und 2 enthaltenen Komponenten
- danach chemische und/oder biochemische synthetische und/oder biologische Aufbereitung der aus dem flüssigen Überstand der Medien 1 und 2 identifizierten Komponenten zum erfindungsgemäßen Mittel für eine entsprechende selektive Anwendung von Komponenten oder
- chemische und/oder biochemische synthetische und/oder biologische Aufbereitung der aus dem flüssigen Überstand der Medien 1 und 2 identifizierten Komponenten zum erfindungsgemäßes Mittel für eine entsprechende Anwendung als Komponentengemisch.

Die Erfindung trägt zu einer deutlich verbesserten und verlängerten Aufrechterhaltung der Vitalparameter von Säugetierspermien unter verschiedenen Umgebungstemperaturen in einem Bereich von + 3°C bis 40°C bei.

## Beschreibung

Die Erfindung betrifft ein Mittel zur Konservierung von Sperma von Säugetieren und die Verwendung des Mittels.

Zur Verbesserung der Lagerstabilität sowie zur Erhaltung und Verbesserung der strukturellen und funktionalen Integrität von Säugetiersperma sind eine Vielzahl technischer Lösungen bekannt.

So geht aus DD 238 304 A3 ein Verfahren zur Erhöhung der Lagerstabilität von Blutzellen und Sperma bei der hypothermen oder kryothermen Konservierung hervor, bei dem Konservierungsmedium Penicillin bzw. Penicillin-Derivate in einer bestimmten Konzentration zugesetzt werden.

DD 93 226 beschreibt ein Verfahren zum Konservieren von Ebersperma durch Tiefgefrieren, bei dem das Ejakulat nach der Entnahme zentrifugiert, das Sediment verdünnt und danach auf eine Temperatur von -180°C bis -200°C eingefroren wird.

EP 2 043 431 B1 beschreibt Kryoschutzmedien für Spermien. Ein Verfahren zur Kryokonservierung von Spermien umfasst die Zugabe einer Zusammensetzung zu den Spermien vor der Kryokonservierung, die mindestens ein Kryoschutzmittel, mindestens ein Membranschutzmittel und Monothioglycerin umfasst. Eine kryokonservierte Zusammensetzung besteht aus nicht-menschlichem Säugetiersperma und einer Zusammensetzung zur Kryokonservierung, wobei die Zusammensetzung mindestens ein Kryoschutzmittel, mindestens ein Membranschutzmittel und Monothioglycerin enthält.

Aus EP 2 801 363 B1 geht ein Verfahren zur Aufbewahrung von sortierten Spermatozoen hervor, das das Bilden einer Spermiendispersion aus Spermatozoen und einem Mobilitätsinhibitor mit einem DNS-selektiven Farbstoff umfasst, die Spermiendispersion in getrennte Populationen sortiert wird und eine Population für mindestens 24 Stunden bei einer Temperatur von -196°C bis - 4°C mit der Zugabe von einem Kryostreckmittel mit einem Mobilitätsinhibitor aufbewahrt wird, um die Auswirkungen auf die Lebensfähigkeit oder die Mobilität nach dem Auftauen zu minimieren.

Ein weiteres Verfahren zur kryogenischen Konservierung von Sperma offenbart EP 3 288 378 B1 bei dem das zu konservierende Sperma mit einer Zusammensetzung kombiniert wird, die einen oder mehrere Baumsäfte und ein Streckmedium umfasst.

Bekannt sind in diesem Zusammenhang auch Verdünnungsmittel für Sperma. So geht aus DE 698 00 966 T2 ein Spermaverdünner hervor, der eine gereinigte Fraktion von nativem Phosphocaseinat und/oder einer gereinigten Fraktion von ß-Lactoglobulin enthält.

Mit den genannten technischen Lösungen verbindet sich das Problem, dass sie energieaufwendig und damit auch klimaschädlich sind und eine logistisch anspruchsvolle Versorgung mit Flüssigstickstoff erfordern.

Konventionelle Spermienverdünner (Haltemedien) erreichen für den Erhalt der Lebensfähigkeit des Sperma eine Zeitspanne von lediglich wenigen Tagen (z.B. Vishwanath and Shannon, 2000; Johnson et al., 2000).

Darüber hinaus gibt es Arten, für die geeignete Kryokonservierungsprotokolle, die ein ausreichendes Überleben von Spermienzellen für beispielsweise künstliche Besamungen gewähren, fehlen (z.B. das Hausschwein, *Sus scrofa,* Johnson et al., 2000; Koala, *Phascolarctos cinereus;* Johnston et al., 2006).

Bei anderen Arten führen interindividuelle Unterschiede beim Erfolg der Spermienkryopräservierung dazu, dass die Gameten einiger männlicher Tiere nicht erfolgreich gelagert werden können (z. B. Waterhouse et al., 2006).

Des Weiteren sind Spermien beim Einfrieren und Auftauen in der Verdünnungs-, Abkühlungs-, Gleichgewichts- oder Gefrier- und Auftauphase chemischen/toxischen, osmotischen, thermischen, mechanischen und oxidativen Belastungen ausgesetzt, die zu einer um ca. 30-50% reduzierten Motilität und Vitalität sowie zur Kapazitation führen, einem biochemischen Reifungsprozess, den die Samenzellen nach der Ejakulation normalerweise erst im weiblichen Genitaltrakt vollziehen und welcher die Lebensdauer der Spermien herabsetzt. Dies führt zu einem verkürzten möglichen Zeitfenster um den Östrus für die erfolgreiche künstliche Besamung von weiblichen Tieren im Vergleich zur Besamung mit zuvor nicht gefrorenen Spermien.

Aufgabe der Erfindung ist es daher, zur Überwindung der genannten Probleme und Schwierigkeiten ein geeignetes Mittel zur Konservierung der Spermien von Säugetieren bereitzustellen.

Erfindungsgemäß wird die Aufgabe durch ein Mittel zur Konservierung von Säugetiersperma gelöst, das erhalten wird
- durch Extraktion eines Mediums 1 als flüssige Phase mit Spermien aus dem Uterus und dem Eileiter spermienspeichernder Fledermäuse, welches es den Fledermausweibchen ermöglicht, Spermien zu selektieren und bis zur Befruchtung einer Eizelle bei einer Temperatur zwischen +3°C und +40°C über einen längeren Zeitraum von bis zu 7 Monaten lebensfähig zu halten
   und
- durch Extraktion eines Mediums 2 als flüssige Phase mit Spermien aus dem Nebenhoden spermienspeichernder Fledermäuse, welches es ihnen ermöglicht, Spermien bei einer Temperatur zwischen +3°C und +40°C über einen längeren Zeitraum von bis zu 7 Monaten lebensfähig zu halten,
- anschließend Ermittlung des pH-Wertes und der Osmolarität der Medien 1 und 2 sowie der Art und Weise der Umhüllung beziehungsweise der Verpackung der Spermienmembran sowie des Spermiengenoms,
- danach jeweils Separieren der flüssigen Phasen mit den Spermien der Medien 1 und 2 zu einem Pellet mit den Spermien und einem flüssigen Überstand,
- danach jeweils Identifikation der in dem flüssigen Überstand der Medien 1 und 2 enthaltenen Komponenten,
- anschließend chemische und/oder biochemische synthetische und/oder biologische Aufbereitung der jeweils aus den flüssigen Überständen der Medien 1 und 2 identifizierten Komponenten zum erfindungsgemäßen Mittel für eine entsprechende selektive Anwendung identifizierter Komponenten
   oder
- anschließende chemische und/oder biochemische synthetische und/oder biologische Aufbereitung der aus dem flüssigen Überstand der Medien 1 und 2 identifizierten Komponenten zum erfindungsgemäßen Mittel für eine entsprechende Anwendung als Komponentengemisch.

Mit der Erfindung verbindet sich der Vorzug, dass sie zu einer deutlich verbesserten und verlängerten Aufrechterhaltung der Vitalparameter von Säugetierspermien unter verschiedenen Umgebungstemperaturen über einen Bereich zwischen +3°C und +40°C beiträgt.

Es ist das besondere Verdienst der Erfinderin, mit der von ihr vorgeschlagenen technischen Lösung an der Erkenntnis anzuknüpfen, dass unter den Säugetieren Fledermäuse (Chiroptera) einzigartig in ihrer Fähigkeit sind, Spermien über lange Zeiträume in den Nebenhoden und in den weiblichen Reproduktionsorganen (Uterus, Salpinx) zu speichern, die sich bis zu 7 Monate erstrecken können (z.B. bei *Nyctalus noctula*, Racey 1972; Racey 1973; Racey 1974). Nach Pfeiffer & Mayer (2013). ist die Spermatogenese europäischer Fledermäuse (z.B. Glattnasenfledermäuse, Vespertilionidae) im Spätsommer abgeschlossen. Die Spermien werden anschließend im Nebenhoden gespeichert. Paarungen finden vom Spätsommer bis zum Frühjahr statt. Kurz nach dem Ende des Winterschlafes findet der Eisprung statt. Die Eizellen werden mit Spermien befruchtet, die länger als ein halbes Jahr im männlichen und weiblichen Genitaltrakt bei Temperaturen zwischen 40° C im Flug und 3° C im Winterschlaf gelagert werden.

Es ist des Weiteren das Verdienst der Erfinderin, einen Beitrag zum Aufzeigen der Mechanismen zu leisten, die bei Fledermäusen die Lebensdauer der Spermien über einen so langen Zeitraum gewährleisten und diese auf die Lagerung von Säugetierspermien anderer Arten zu übertragen.

In diesem Zusammenhang wurde auch festgestellt, dass Spermien spermienspeichender Fledermäuse im unmittelbar *post mortem* präparierten und isolierten Genitaltrakt, der bei 4°C bis 6°C in Zellkulturmedium (DMEM/F12 + GlutaMAX, 1% Penicillin-Streptomycin and 1% Antibiotika-Antimykotikum) gelagert wird, die Motilität über mindestens zwei Monate bewahren können.

Die Erfindung eröffnet die Möglichkeit, bei der künstlichen Besamung durch Verwendung des erfinderischen Mittels als Zusatz zum einzubringenden Säugetiersperma ein verbessertes Gebärmuttermilieu zu erreichen das mit einem verbesserten Befruchtungsergebnis im Vergleich zum Einsatz konventioneller Spermienverdünner und Medien zur Kryokonservierung von Spermien einhergeht.

Gemäß einer besonderen Ausführungsform der Erfindung erfolgt die Extraktion des Mediums 1 aus dem Uterus und dem Eileiter durch Öffnen der Bauchhöhle und Präparation des intakten weiblichen Genitaltraktes am nicht lebenden Körper unmittelbar nach Feststellen des Todes
- wobei das Medium 1 als flüssige Phase mit den Spermien aus dem Lumen des Uterus und des Eileiters durch Punktion mittels einer Kanüle mit Spritze aspiriert ist
   oder
- dass nach Eröffnung des Uterus und Eileiters mit einem Skalpell mittels einer Kanüle mit Spritze oder Kapillare die flüssige Phase mit den Spermien als Medium 1 aus dem Lumen des Uterus und des Eileiters aspiriert ist.

Typischerweise erfolgt die Gewinnung des Medium 2 aus dem Nebenhoden durch Punktion mittels einer Nadel und anschließender Aspiration der flüssigen Phase mit den Spermien mittels einer Spritze aus dem Lumen des Nebenhoden unter Vermeidung des Kontaktes mit atmosphärischer Luft am nicht lebenden Köper unmittelbar nach Feststellen des Todes.

Alternativ kann die Gewinnung des Medium 2 am nicht lebenden Körper unmittelbar nach Feststellen des Todes als flüssige Phase mit den Spermien aus dem Nebenhoden nach dessen Präparation und eine sich anschließende Eröffnung des intakten Nebenhodens mit einem Skalpell durch Aspiration mittels einer Kanüle mit Spritze oder Kapillare aus dem Lumen des Nebenhodens erfolgen.

Gemäß einer besonders bevorzugten Ausführungsform der Erfindung erfolgt das Separieren der flüssigen Phasen mit den Spermien der Medien 1 und 2 unter Bildung eines Pellets mit den Spermien und eines flüssigen Überstandes durch Zentrifugieren oder mittels Abtrennen der Spermien durch Ausschwimmen, beispielsweise mit Hilfe des Zechselektor-Verfahrens.

Der flüssige Überstand wird von den spermienreichen Pellets abgetrennt und kann gemäß der Erfindung für weitere Analysen sofort eingesetzt werden oder er wird schockgefroren und in flüssigem Stickstoff (- 196°C) deponiert.

Die Aufbereitung der chemisch und/oder biochemisch synthetisierten und/oder biologisch gewonnenen Komponenten die in den flüssigen Überständen der Medien 1 und 2 vorliegen.

Für komplementäre Analysen kann die Separation der Medien 1 und 2 auch mittels Gradientenzentrifugen vorgenommen werden, um ggf. Exosomen, ca. 30 bis 90 nm große Vehikel, zu isolieren, die von Zellen des spermienspeichernden weiblichen oder männlichen Genitaltraktes an die Umgebung abgegeben werden und biologisch aktive Komponenten beinhalten können.

Des Weiteren ist vorgesehen, Sekrete der akzessorischen Geschlechtsdrüsen zu isolieren und zu untersuchen, da diese bei der Kopulation mit in den weiblichen Genitaltrakt gelangen und somit ebenfalls wirksame Komponenten beinhalten können.

Bei der Durchführung der Erfindung kommt der Bestimmung des die Beweglichkeit der Spermien wesentlich beeinflussenden pH-Wertes und der Osmolarität der Medien 1 und 2 ebenso eine besondere Bedeutung zu wie der Analytik der Umhüllung bzw. Verpackung der Spermienmembran und des Spermiengenoms. So sind Histone als basische Proteine von essenzieller Bedeutung für die Verpackung der DNA.

Darüber hinaus sind die spezifische Dichte und die Viskosität des flüssigen Überstandes zu bestimmen.

Eine besonders bevorzugte Ausführungsform der Erfindung sieht vor, die Identifikation der in den flüssigen Überständen enthaltenen Komponenten mittels Microliquidchromatographie gekoppelt mit Massenspektroskopie und/oder mittels Elektrophoreseanalytik (SDS-page) und/oder mittels NanoLC-ft-ms-Kopplung und/oder mittels eines anderen für die Analytik von Mikromengen geeigneten Verfahrens vorzunehmen.

Hierbei erweist sich die NanoLC-ft-ms-Kopplung als besonders vorteilhaft für die Sequenzierung, Identifizierung und Massebestimmung von Proteinen, insbesondere auch auf Grund der Nachweisgrenzen bis zu 1 femtomol/microliter.

Bestandteil der Erfindung ist des Weiteren
- die Durchführung einer Transkriptomanalyse des Uterus- / Salpinx- / Nebenhodengewebes zur Zeit der Spermienspeicherung und zu Zeitpunkten zu denen keine Spermienspeicherung stattfindet. Durch den Vergleich der Expressionsmuster sowohl zwischen dem spermienspeichernden und dem nicht-spermienspeichernden Zustand eines Organs sowie zwischen den verschiedenen Organen werden differentiell exprimierte Gene identifiziert. Das Annotieren der zwischen spermienspeicherndem und nicht spermienspeicherndem Zustand differentiell exprimierten, bzw. bei Spermienspeicherung von Uterus- / Salpinx- / Nebenhodengewebe konsistent exprimierten Transkripte erfolgt auf Grundlage von publizierten Genomen und ermöglicht das Identifizieren involvierter Stoffwechselwege. Aus den zuvor identifizierten RNA-Transkripten kann die dazu komplementäre cDNA im Zuge einer RT-PCR mit Hilfe des Enzyms Reverse Transkriptase hergestellt werden. Dies ermöglicht die Klonierung der cDNA in Vektoren wie z.B. Plasmiden und die anschließende rekombinante Proteinexpression, welche sowohl zur Charakterisierung der Produkte als auch zur biologischen Herstellung von Komponenten eingesetzt werden, die jenen aus dem flüssigen Überstand entsprechen;
- die Durchführung einer Metabolomanalyse des Uterus- / Salpinx- / Nebenhodengewebes zur Zeit der Spermienspeicherung und zu Zeitpunkten zu denen keine Spermienspeicherung stattfindet. Durch den Vergleich der Stoffwechselprodukte sowohl zwischen dem spermienspeichernden und dem nicht-spermienspeichernden Zustand eines Organs sowie zwischen den verschiedenen Organen werden die mit der Spermienspeicherung assoziierten vorhandenen Metaboliten identifiziert;
- das Etablieren von Zellkulturen von Endometrium / Uterindrüsen / Salpinxepithel / Nebenhodengewebe aus frischen Bioptaten von Uterusgewebe / Salpinxgewebe / Nebenhodengewebe mit Hilfe geeigneter Zellkulturmedien mit dem Ziel, auf diesem Wege die in den flüssigen Überständen identifizierten Komponenten biologisch herzustellen. Das kann unter verschiedenen hormonellen Bedingungen durch Zugabe von z.B. Östrogenen, luteinisierendem Hormon (LH), Progesteron erfolgen und zwischen diesen Bedingungen das Ergebnis verglichen werden.
- Die biologisch so gewonnenen Substanzen werden einer vergleichenden Analyse mit den tatsächlich identifizierten Komponenten des flüssigen Überstandes unterzogen, um den Grad der Übereinstimmung festzustellen. Darüber hinaus können die Interaktion von Spermien derselben oder einer anderen Art mit den Zellen dieser Zellkultur sowie die Überlebensdauer von Spermien in der Zellkultur untersucht werden.

Vergleichende funktionelle Tests von Spermien unterschiedlicher Säugetierarten ohne und mit Zusatz des erfindungsgemäß hergestellten Mittels haben bezogen auf die Untersuchung der Überlebensdauer, Motilitäts- und Vitalitätsparameter von Spermien zu einem positiven Ergebnis bei Verwendung des erfindungsgemäßen Mittels geführt.

Erfindungsgemäß wird das nach dem beschriebenen Verfahren gewonnene Mittel zur Verbesserung der Vitalparameter von Säugetiersperma als Zusatz für bekannte Flüssigspermaverdünner und für Medien zur Kryokonservierung sowie als alleiniges Haltemittel für derartige Spermien oder als Medium für die Kryokonservierung verwendet.

Die Vitalparameter der Spermienzellen können darüber hinaus verbessert werden, wenn die Zelldispersion unter Bedingungen eines verminderten Sauerstoffgehalts im Vergleich zur normalen Atmosphäre aufbewahrt wird. Dies kann entweder dadurch erreicht werden, dass die Gasatmosphäre über der Spermiendispersion gegen eine Gasatmosphäre mit im Vergleich zur normalen Atmosphäre erhöhtem CO₂-Partialdruck (0.5 atm - 2 atm) oder Stickstoffpartialdruck oder einem anderen inerten Gas ersetzt wird oder durch Zugabe einer löslichen lonenquelle als CO₂-Quelle welche die Immotilität der Spermien begünstigt. Immotilität der Spermien kann zu einer geringeren endogenen Zellatmung oder einer größeren Rate aerober Glykolyse führen. Eine solche CO₂-Quelle kann in der Dispersion in Form einer Komponente, z.B. in Form von einem oder verschiedener Karbonate oder als erhöhter CO₂-Partialdruck im Vergleich zur Umgebungsluft sein, oder eine Kombination aus beidem.

Die Spermiendispersion kann außerdem einen Puffer und weitere Zusätze enthalten, die die Spermienvitalität erhöhen, wie z.B. Sterole, Lipide, Fettsäuren, Proteinquellen (z.B. Eigelb, Eigelbextrakt, Milch, Milchextrakt, Sojaprotein, Sojaproteinextrakt, Serumalbumin, humanes (HSA) oder bovines Serumalbumin (BSA), Seminalproteine wie z.B. Seminalplasma und Seminalplasmaextrakt), alternative Proteinquellen (z.B. Polyvinylalkohol), Antibiotika zum Verhindern bakteriellen Wachstums (z.B. Tylosin, Gentamycin, Lincomycin, Spectinomycin, Penicillin, Streptomycin, Ticarcillin, Polymyxin B, Cefovexin, Tulathromycin oder eine Kombination), Wachstumsfaktoren (z.B. TGF, IGF oder Kombinationen), und/oder Komponenteen, welche intra- und extrazelluläre Redoxreaktionen regulieren sowie Kombinationen daraus (z.B. Pyruvat, Vitamin K, Liponsäure, Gluthathione, Flavine, Quinone, Superoxidismutase (SOD), Capronsäure, Katalase, Caprogen).

Weiterhin kann die Dichte der Spermien in der Spermiendispersion auf einen optimalen Bereich angepasst werden. Dies kann durch einfaches Konzentrieren, wie zum Beispiel durch Zentrifugation erreicht werden. Dabei trennt sich die Dispersion in ein Pellet (Masse von Zellen, die eine minimale Menge an Flüssigkeit enthalten) und einen Überstand (eine lösliche flüssige Fraktion) auf. Der Überstand kann dann ohne Störung des Pellets dekantiert werden. Dies führt zu einem relativ dichten Spermienpellet. Durch Zugabe einer definierten Menge des erfindungsgemäß hergestellten Mittels kann eine optimale Zelldichte eingestellt werden.

Durch Lyophilisieren von in den flüssigen Überständen identifizierten Komponenten können diese haltbarer und/oder besser lagerungsfähig gemacht werden.

## Patentansprüche

1. Mittel zur Konservierung von Säugetiersperma **dadurch gekennzeichnet, dass** es gewonnen wird
- durch Extraktion eines Mediums 1 als flüssige Phase mit Spermien aus dem Uterus und dem Eileiter spermienspeichernder Fledermäuse, welches es den Fledermausweibchen ermöglicht, Spermien zu selektieren und bis zur Befruchtung einer Eizelle bei einer Temperatur zwischen 40°C und 3°C lebensfähig zu halten
und
- durch Extraktion eines Mediums 2 als flüssige Phase mit Spermien aus dem Nebenhoden spermienspeichernder Fledermäuse, welches es ihnen ermöglicht, Spermien bei einer Temperatur zwischen 40°C und 3°C lebensfähig zu halten,
- durch anschließende Ermittlung des pH-Wertes und Osmolarität der Medien 1 und 2 sowie der Art und Weise der Umhüllung beziehungsweise Verpackung der Spermienmembran und des Spermiengenoms,
- danach jeweils Separieren der flüssigen Phasen mit Spermien der Medien 1 und 2 zu einem Pellet mit gespeicherten Spermien und zu einem flüssigen Überstand,
- anschließend jeweils Identifikation der in dem flüssigen Überstand der Medien 1 und 2 enthaltenen Komponenten
- danach chemische und/oder biochemische synthetische und/oder biologische Aufbereitung der aus dem flüssigen Überstand der Medien 1 und 2 identifizierten Komponenten zum erfindungsgemäßen Mittel für eine entsprechende selektive Anwendung von Komponenten
oder
- chemische und/oder biochemische synthetische und/oder biologische Aufbereitung der aus dem flüssigen Überstand der Medien 1 und 2 identifizierten Komponenten zum erfindungsgemäßen Mittel für eine entsprechende Anwendung als Komponentengemisch.

2. Mittel nach Anspruch 1, **dadurch gekennzeichnet, dass** die Extraktion des Mediums 1 aus dem Uterus und dem Eileiter durch Eröffnen der Bauchhöhle und Präparation des intakten weiblichen Genitaltraktes am nicht lebenden Körper unmittelbar nach Feststellen des Todes erfolgt und
- dabei durch Punktion mit einer Kanüle das Medium 1 als flüssige Phase mit den Spermien aus dem Lumen des Uterus und des Eileiters unter Vermeidung eines Kontaktes mit atmosphärischer Luft mittels einer Spritze oder Kapillare aspiriert ist oder
- dass nach Eröffnung des Uterus und des Eileiters mit einem Skalpell das Medium 1 als flüssige Phase mit den Spermien aus dem Lumen des Uterus und des Eileiters mittels einer Kanüle mit Spritze oder Kapillare aspiriert ist.

3. Mittel nach Anspruch 1, **dadurch gekennzeichnet, dass** die Gewinnung des Medium 2 aus dem Nebenhoden am nicht lebenden Körper unmittelbar nach Feststellen des Todes
- durch Punktion mittels einer Kanüle mit Spritze und anschließender Aspiration der flüssigen Phase mit den Spermien aus dem Lumen des Nebenhoden unter Vermeidung des Kontaktes mit atmosphärischer Luft erfolgt
oder
- nach dessen Präparation und eine sich anschließende Eröffnung des intakten Nebenhodens mit einem Skalpell durch Aspiration der flüssigen Phase mit den Spermien mittels Kanüle und Spritze oder Kapillare aus dem Lumen des Nebenhodens erfolgt.

4. Mittel nach Anspruch 1, **dadurch gekennzeichnet, dass** das Separieren der in den Medien 1 und 2 enthaltenen flüssigen Phasen mit den Spermien der Medien 1 und 2 jeweils zur Bildung eines Pellets mit den Spermien und einem flüssigen Überstand führt und durch Zentrifugieren oder durch Abtrennen der Spermien durch Ausschwimmen erfolgt.

5. Mittel nach Anspruch 1, **dadurch gekennzeichnet, dass** die Identifikation der in den flüssigen Überständen enthaltenen Komponenten mittels Microliquidchromatographie gekoppelt mit Massenspektroskopie und/oder mittels Elektrophoreseanalytik (SDS-page) und/oder mittels NanoLC-ft-ms-Kopplung und/oder mittels eines anderen für die Analytik von Mikromengen geeigneten Verfahrens erfolgt.

6. Mittel nach Anspruch1, **dadurch gekennzeichnet, dass** die Aufbereitung der chemisch und/oder biochemisch synthetisierten und/oder biologisch hergestellten Komponenten in den Proportionen erfolgt, wie sie in den flüssigen Überständen der Medien 1 und 2 festgestellt wurden.

7. Verwendung des nach den Merkmalen der Ansprüche 1 bis 7 hergestellten Mittels als Zusatz für Flüssigspermaverdünner und für Medien zur Kryokonservierung von Säugetierspermien oder als alleiniges Haltemedium derartiger Spermien sowie als alleiniges Medium unter Zugabe eines Kryoprotektivums für die Kryokonservierung.
